Europäisches Patentamt

European Patent Office

Office européen des brevets

(19)

(11) Numéro de publication : **0 451 042 A1**

# (12) DEMANDE DE BREVET EUROPEEN

(21) Numéro de dépôt : **91400882.6**

(22) Date de dépôt : **29.03.91**

(51) Int. Cl.⁵ : **B29C 33/56, B29C 45/26**

(30) Priorité : **02.04.90 FR 9004188**

(43) Date de publication de la demande :
**09.10.91 Bulletin 91/41**

(84) Etats contractants désignés :
**BE CH DE ES FR GB IT LI NL SE**

(71) Demandeur : **SEVA, société dite,**
**43, rue du Pont de Fer**
**F-71100 Chalon-sur-Saône (FR)**

(72) Inventeur : **Laurent, Alain**
**La Saugerée**
**F-71240 Laives (FR)**
Inventeur : **Pillon, Marcel**
**Raconnay**
**F-71590 Cergy (FR)**
Inventeur : **Thiery, Jacques**
**15 Allée de la Bure Domaine Plein Soleil**
**F-54270 Essey Lès Nancy (FR)**

(74) Mandataire : **Jacobson, Claude et al**
**Cabinet Lavoix 2, Place d'Estienne d'Orves**
**F-75441 Paris Cedex 09 (FR)**

(54) **Moule pour le moulage de pièces en matière plastique, et son procédé de fabrication.**

(57)    Chaque demi-moule (4,5) comprend un cadre métallique (6) qui entoure une masse de béton (7) pourvue d'un revêtement métallique (8) délimitant la cavité de moulage, et au moins un organe d'accrochage (9) dont une partie est noyée dans le béton et dont le reste est noyé dans le revêtement métallique.

Application au moulage de pièces en matière plastique en particulier de grandes dimensions, par exemple d'éléments de carrosserie pour véhicules automobiles.

EP 0 451 042 A1

Jouve, 18, rue Saint-Denis, 75001 PARIS

FIG.1

La présente invention est relative à un moule pour le moulage de pièces en matière plastique, du type dans lequel au moins un demi-moule comporte un cadre métallique qui entoure une masse de béton pourvue d'un revêtement métallique délimitant la cavité de moulage.

Des moules de ce type ont été proposés pour rendre plus économique le moulage de pièces en matière plastique en particulier de grandes dimensions, telles que des éléments de carrosserie pour véhicules automobiles réalisées classiquement dans des moules entièrement en acier.

Cependant, il reste à développer une technologie de réalisation de ces moules permettant d'atteindre de façon économique un degré de fiabilité et de performances acceptable industriellement.

L'invention a pour but de fournir une telle technologie. A cet effet, elle a pour objet un moule du type précité, caractérisé en ce que ledit demi-moule comprend au moins un organe d'accrochage dont une partie est noyée dans le béton et dont le reste est noyé dans le revêtement métallique.

Suivant des caractéristiques avantageuses :
– l'organe d'accrochage comprend une nappe ondulée qui dépasse alternativement de part et d'autre de l'interface béton-métal ;
– la nappe est constituée d'un grillage ou d'un treillis, notamment métallique, ou d'un mat de fibres ;
– ledit demi-moule comprend au moins un insert, notamment métallique, qui traverse le revêtement métallique et pénètre dans le béton ;
– l'insert présente une surface extérieure rugueuse dans sa partie située dans le revêtement métallique, et/ou des évidements d'accrochage du béton ;
– lorsque le moule est destiné au moulage d'une pièce délimitée par une surface gauche, ledit demi-moule présente un dégagement à l'extérieur de la surface gauche, et le bord du cadre présente une géométrie de forme nettement plus simple que cette surface gauche, notamment constituée d'un nombre réduit de surfaces planes ;
– ledit demi-moule comprend au moins un serpentin d'échange de chaleur noyé dans le béton ;

L'invention a également pour objet un procédé de fabrication d'un demi-moule pour moule tel que défini ci-dessus. Suivant ce procédé :
(a) on confectionne un modèle positif de la pièce à mouler ;
(b) on dépose sur ce modèle au moins une couche de revêtement métallique ;
(c) on met en place sur cette couche l'organe d'accrochage ;
(d) on dépose sur l'ensemble au moins une couche supplémentaire de revêtement métallique ;
(e) on coule le béton sur le revêtement; et, après démoulage
(f) on ajuste localement la surface métallique définissant la cavité de moulage.

De préférence :
– entre les étapes (a) et (b), on dispose au moins un insert métallique pénétrant dans le modèle, la partie saillante de cet insert étant éventuellement éliminée pendant l'étape (f).
– entre les étapes (d) et (e), on positionne au moins un élément d'échange de chaleur destiné à être noyé dans le béton.

Quelques exemples de mise en oeuvre de l'invention vont maintenant être décrits en regard des dessins annexés, sur lesquels :
– la Fig. 1 est une vue schématique partielle, en coupe verticale, d'une installation de moulage mettant en oeuvre l'invention ;
– les Fig. 2 et 3 sont des vues analogues, à plus petite échelle, de deux variantes ;
– la Fig. 4 est une vue schématique en perspective d'un autre demi-moule conforme à l'invention ; et
– la Fig. 5 est une vue prise suivant la flèche V de la Fig. 4.

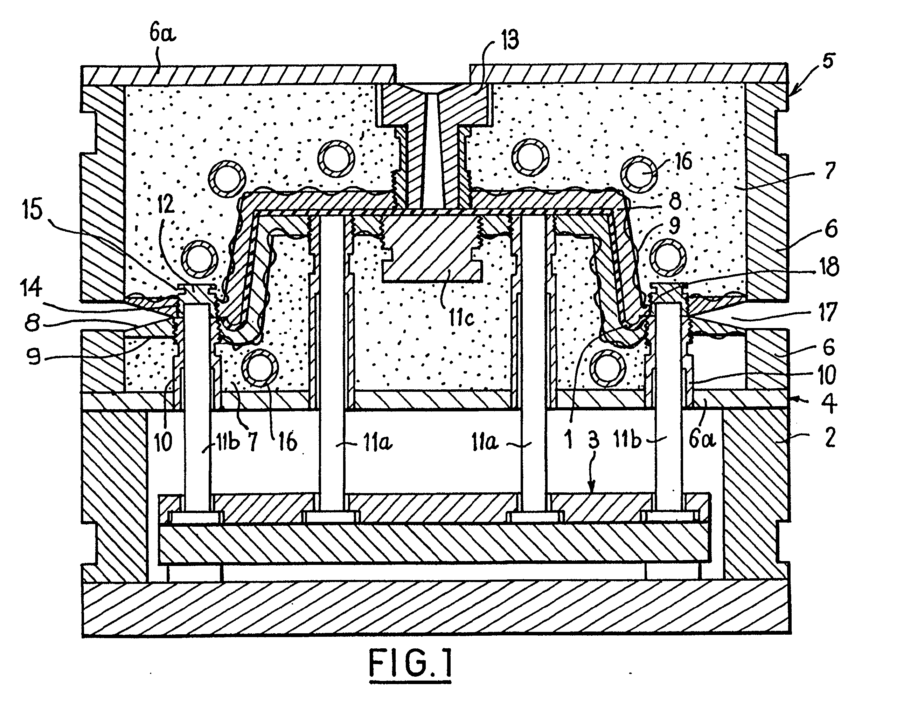

L'installation de moulage représentée à la Fig. 1 est destinée à réaliser par moulage par injection une pièce 1 dont les dimensions peuvent être importantes. Elle comprend un bâti 2 muni d'un dispositif d'éjection 3 et portant un demi-moule inférieur fixe 4, et un demi-moule supérieur 5 mobile verticalement, les deux demi-moules formant le moule de l'installation.

Chaque demi-moule comprend un cadre ou frette périphérique 6 réalisé en métal de forte épaisseur, complété par une plaque arrière 6a et, dans ce cadre, un corps 7 en béton pourvu d'un revêtement métallique 8, par exemple de zinc ou d'un alliage Zn-Al, dont la surface libre définit la cavité de moulage. De plus, un grillage métallique ondulé 9 est prévu au voisinage de l'interface béton-métal, les ondes de ce grillage pénétrant alternativement dans le béton et dans le revêtement métallique. Le grillage 9 assure un excellent accrochage mutuel du béton 7 et du revêtement 8. En variante, le grillage 9 peut ne pas être en métal et également être remplacé par un autre type de nappe ondulée, tel qu'un treillis (non tissé) métallique ou non ou un mat de fibres, par exemple de fibres de verre ou de carbone.

Chaque demi-moule comporte encore un certain nombre d'inserts métalliques noyés partiellement dans le béton et partiellement dans le revêtement 8 et affleurant la surface libre de ce dernier, à savoir :
– pour le demi-moule 4 : des manchons 10 servant au passage des tiges 11a d'éjection et 11b de retour du dispositif 3, et un renfort 11c disposé face à l'injecteur de matière plastique ;
– Pour le demi-moule 5 : (a) des appuis 12 disposés en regard des manchons 10 et servant à l'appui des tiges 11b lors de la fermeture du moule. Et (b) un injecteur de matière plastique 13.

Chacun des inserts 10, 11c, 12 et 13 présente extérieurement une surface rugueuse 14, obtenue par sablage, dans sa région noyée dans le revêtement 8, ainsi que des évidements latéraux 15 dans sa région noyée dans le béton. Ceci assure l'accrochage des deux matériaux sur les inserts.

Dans le corps 7 de chaque demi-moule est par ailleurs noyé un serpentin 16 de circulation d'un fluide de chauffage ou de refroidissement, suivant la matière plastique traitée, et, à l'extérieur de la cavité de moulage, le moule définit jusqu'au cadre 6 un dégagement 17, de sorte que les deux cadres ne sont pas en contact mutuel lorsque le moule est fermé suivant une surface de joint 18 à génératrices horizontales.

Pendant le moulage, comme représenté à la Fig. 1, le serpentin 16, disposé au voisinage du revêtement 8, assure un transfert de chaleur efficace et rapide vers la cavité de moulage, avec un minimum de pertes de chaleur.

pour fabriquer chaque demi-moule 4, 5, on effectue les opérations suivantes :

– on réalise un modèle positif en résine dont la partie centrale reproduit la partie correspondante de la pièce à mouler, et dont la périphérie définit le dégagement 17 ;
– on positionne les différents inserts 10, 11c, 12 et 13, en les faisant légèrement pénétrer dans le modèle ;
– par tout procédé approprié de métallisation, par exemple par projection plasma ou à l'arc électrique, on dépose une première couche de revêtement métallique ;
– on positionne sur cette première couche le grillage ondulé 9 ;
– on dépose le reste du revêtement 8 ;
– on positionne le serpentin 16 et le cadre 6 ;
– on coule le béton 7 ;
– après la prise et le durcissement du béton et le démoulage de l'ensemble, on ajuste localement la surface libre du revêtement 8 en éliminant la partie saillante des inserts, éventuellement en procédant à des rechargements localisés, on polit cette surface et on lui applique un revêtement métallique de finition tel qu'un nickelage ou un cuivrage-chromage.

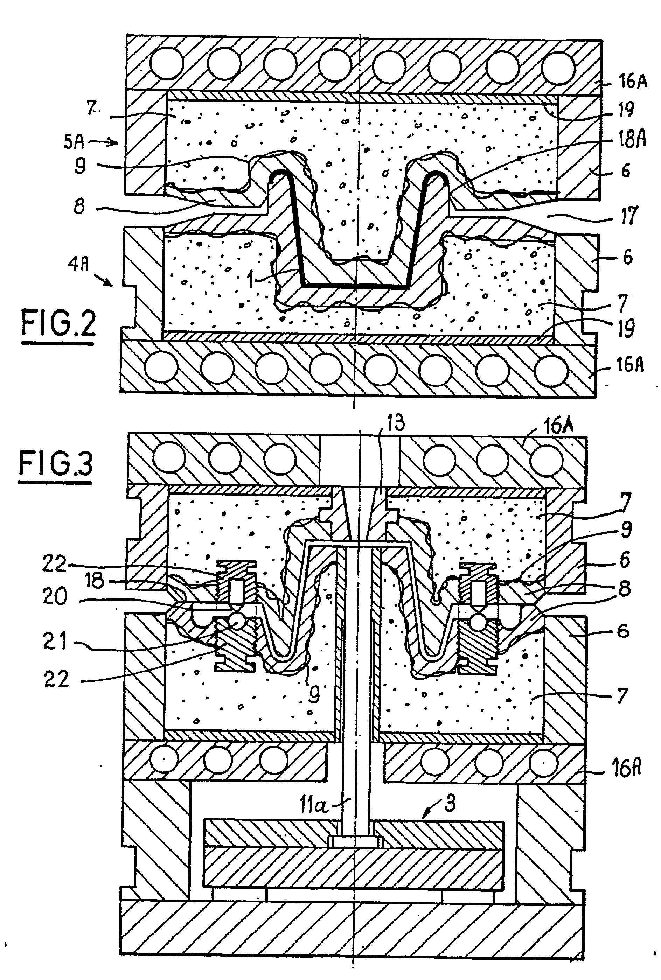

La Fig. 2 représente de façon simplifiée l'application de l'invention au moulage par compression. Les demi-moules 4A, 5A ont la même structure générale que précédemment, bien que les inserts n'aient pas été représentés. Les différences sont les suivantes :
– la surface de joint 18 de la Fig. 1 est remplacée par une surface de joint cylindrique 18A ;
– l'injecteur et le renfort 11c sont supprimés ; et
– chaque serpentin est remplacé par un plateau chauffant 16A en contact avec la face arrière du demi-moule, avec interposition d'une couche de métallisation 19 pour assurer une bonne conduction thermique.

Comme il est bien connu dans la technique, le moulage par compression consiste à déposer dans la cavité de moulage une feuille de matière plastique, puis à fermer le moule tout en chauffant pour provoquer un fluage de la matière assurant le remplissage de la cavité de moulage.

L'installation de moulage représentée à la Fig. 3 est destinée au moulage de pièces par le procédé RTM (Resin Transfer Moulding), qui consiste à positionner un mat de fibres de renforcement, par exemple de fibres de verre, dans la cavité de moulage, puis à injecter la matière plastique après fermeture du moule.

Dans ce procédé, il est nécessaire de maintenir le mat pendant l'injection, et, comme indiqué à la Fig. 3, ce maintien peut s'effectuer au moyen d'une lame 20 et d'un jonc 21 s'étendant tout autour de la cavité de moulage, ces organes étant portés par des inserts métalliques 22 noyés partiellement dans le béton et partiellement dans le revêtement 8 et munis comme précédemment de moyens d'accrochage dans ces derniers. Lorsque le moule est fermé, la lame 20 et le jonc 21 coincent entre eux la périphérie du mat, et un plan de joint horizontal 18 est défini par le revêtement 8 à l'extérieur de l'ensemble 20-21

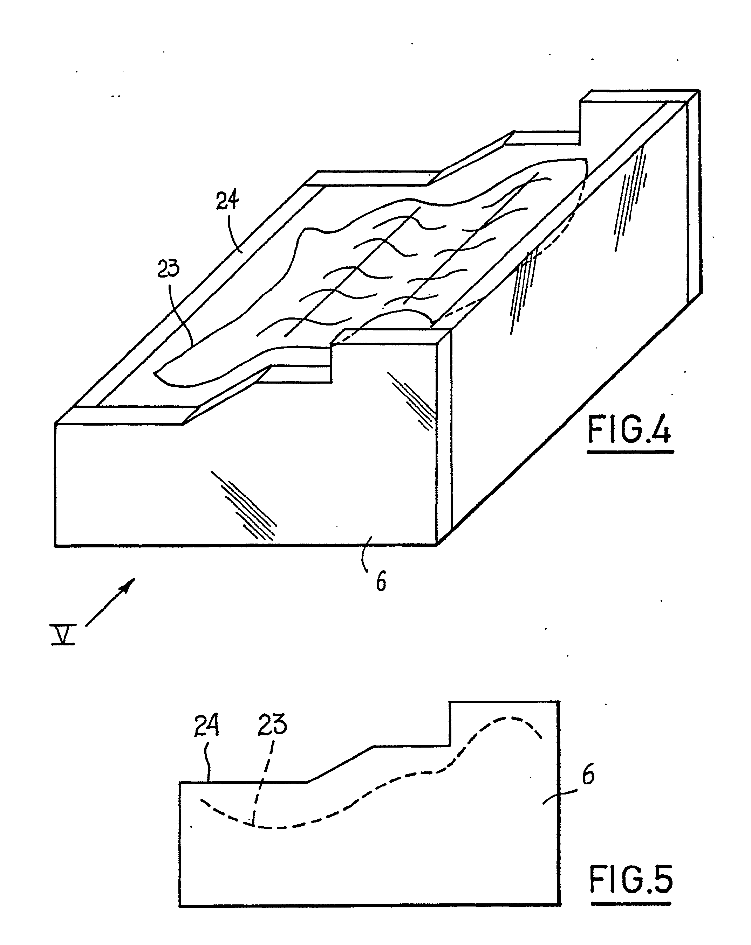

Les Fig. 4 et 5 illustrent la configuration générale d'un demi-moule destiné au moulage d'une pièce de forme complexe dont le bord définit une surface gauche 23. Pour éviter l'usinage du cadre 6 suivant une surface gauche analogue, on donne au bord 24 de ce dernier une forme beaucoup plus simple constituée par un petit nombre de surfaces planes qui suivent grossièrement la surface 23. Ceci est rendu possible par le dégagement périphérique, tel que le dégagement 17 visible aux Fig. 1 à 3, prévu autour de la surface 23. Suivant les cas, la surface 23 peut se trouver entièrement au-dessous du bord 24, comme représenté à la Fig. 5, entièrement au-dessus de ce bord, ou partiellement au-dessous et partiellement au-dessus.

**Revendications**

1. Moule pour le moulage de pièces en matière plastique, du type dans lequel au moins un demi-moule (4, 5) comporte un cadre métallique (6) qui entoure une masse de béton (7) pourvue d'un revêtement métallique (8) délimitant la cavité de moulage, caractérisé en ce que ledit demi-moule comprend au moins un organe d'accrochage (9) dont une partie est noyée dans le béton et dont le reste est noyé dans le revêtement métallique.

2. Moule suivant la revendication 1, caractérisé en ce que l'organe d'accrochage (9) comprend une nappe ondulée qui dépasse alternativement de part et d'autre de l'interface béton-métal.

3. Moule suivant la revendication 2, caractérisé en ce que la nappe (9) est constituée d'un grillage ou d'un treillis, notamment métallique, ou d'un mat de fibres.

4. Moule suivant l'une quelconque des revendications 1 à 3, caractérisé en ce que ledit demi-moule comprend au moins un insert (10, 11c, 12, 13, 22), notamment métallique, qui traverse le revêtement métallique et pénètre dans le béton.

5. Moule suivant la revendication 4, caractérisé en ce que l'insert (10, 11c, 12, 13, 22) présente une surface extérieure rugueuse (14) dans sa partie située dans le revêtement métallique, et/ou des évidements (15) d'accrochage du béton.

6. Moule suivant l'une quelconque des revendications 1 à 5, pour le moulage d'une pièce délimitée par une surface gauche (23), caractérisé en ce que ledit demi-moule présente un dégagement à l'extérieur de la surface gauche (23), et en ce que le bord (24) du cadre (6) présente une géométrie de forme nettement plus simple que cette surface gauche, notamment constituée d'un nombre réduit de surfaces planes.

7. Moule suivant l'une quelconque des revendications 1 à 6, caractérisé en ce que ledit demi-moule comprend au moins un serpentin (16) d'échange de chaleur noyé dans le béton.

8. Procédé ,de fabrication d'un demi-moule pour moule suivant l'une quelconque des revendications 1 à 7, caractérisé en ce que :

(a) on confectionne un modèle positif de la pièce à mouler ;

(b) on dépose sur ce module au moins une couche de revêtement métallique ;

(c) on met en place sur cette couche l'organe d'accrochage (9) ;

(d) on dépose sur l'ensemble au moins une couche supplémentaire de revêtement métallique ;

(e) on coule le béton (7) sur le revêtement; et, après démoulage

(f) on ajuste localement la surface métallique définissant la cavité de moulage.

9. procédé suivant la revendication 8, caractérisé en ce qu'entre les étapes (a) et (b), on dispose au moins un insert métallique (10, 12, 13, 22) pénétrant dans le modèle, la partie saillante de cet insert étant éventuellement éliminée pendant l'étape (f).

10. Procédé suivant la revendication 8 ou 9, caractérisé en ce qu'entre les étapes (d) et (e), on positionne au moins un élément (16) d'échange de chaleur destiné à être noyé dans le béton.

FIG.1

**FIG.2**

**FIG.3**

FIG.4

FIG.5

Office européen
des brevets

**RAPPORT DE RECHERCHE EUROPEENNE**

Numero de la demande

EP  91 40 0882

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 341 797  (STAMICARBON B.V.)<br>* Document entier * | 1,8 | B 29 C  33/56<br>B 29 C  45/26 |
| A | FR-A-2 258 465  (CABANNE et al.)<br>* Document entier * | 1-10 | |
| A | FR-A-2 032 303  (IMPERIAL CHEMICAL INDUSTRIES)<br>* Page 3, lignes 4-27; figure 2 * | 1-10 | |
| A | WO-A-8 701 627  (DENKI KAGAKU KOGYO K.K.)<br>* Page 29, lignes 11-16; revendications 1,16,21,23; figure 5 * | 1-5 | |
| A | GB-A-2 113 601  (H. FLETCHER)<br>* Page 2; figures 1-4 * | 1,8 | |
| A | FR-A-2 361 989  (H. EYMAR)<br>* Pages 1,2; figures 1-5 * | 6 | |

**DOMAINES TECHNIQUES RECHERCHES (Int. Cl.5)**

B 29 C
B 21 D
B 28 B

Le présent rapport a été établi pour toutes les revendications

| Lieu de la recherche | Date d'achèvement de la recherche | Examinateur |
|---|---|---|
| LA HAYE | 31-05-1991 | SOZZI R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................
& : membre de la même famille, document correspondant

EPO FORM 1503 03.82 (P0402)